# EUROPEAN PATENT APPLICATION

(11) **EP 3 744 462 A1**
(43) Date of publication of application: **02.12.2020**
(21) Application number: 20177576.4
(22) Date of filing: 29.05.2020
(51) Int. Cl.: B23K 9/095, B23K 9/12, B23K 9/173

(54) **WELDING TORCH AND WIRE FEEDER THAT USE ELECTRODE WIRE FOR VOLTAGE SENSING**

(30) Priority: 31.05.2019 US 201962855221 P; 19.05.2020 US 202016878200
(71) Applicant: Illinois Tool Works Inc., Glenview, IL 60025 (US)
(72) Inventor: HUTCHISON, Richard Martin, Glenview, Illinois 60025 (US); MA, Tiejun, Glenview, Illinois 60025 (US); COSSETTE, Romeo, Glenview, Illinois 60025 (US)
(74) Representative: HGF

(57) **Abstract**

An example welding torch includes: a contact tip configured to conduct welding-type current to a wire electrode; a conductor configured to transfer welding-type current from a welding-type power source to the contact tip; a connector configured to couple the conductor to a wire feeder to receive the welding-type current, the connector comprising an inlet configured to receive the wire electrode from a wire feeder; and a wire liner configured to deliver the wire electrode from the wire feeder to the contact tip via the inlet of the connector, the wire liner being electrically insulated from the conductor along a length of the wire liner and being electrically insulated from the connector.

## Description

### RELATED APPLICATIONS

The present application claims the benefit of U.S. Provisional Patent Application Serial No. 62/855,221, filed May 31, 2019, entitled "WELDING TORCH AND WIRE FEEDER THAT USE ELECTRODE WIRE FOR VOLTAGE SENSING." The entirety of U.S. Provisional Patent Application Serial No. 62/855,221 is expressly incorporated herein by reference.

### BACKGROUND

The present disclosure relates to welding systems and apparatus, and, more particularly, to systems and apparatus that utilize welding electrode wire for voltage sensing.

Welding is a process that has increasingly become ubiquitous in all industries. A wide range of welding systems and welding control regimes have been implemented for various purposes. In continuous welding operations, gas metal arc welding (GMAW) techniques allow for formation of a continuing weld bead by feeding welding wire shielded by inert gas from a welding torch. Electrical power is applied to the welding wire and a circuit is completed through the workpiece to sustain a welding arc that melts the electrode wire and the workpiece to form the desired weld. Voltage across the welding arc is less than the voltage output by the welding-type power source.

### SUMMARY

The present disclosure relates to welding systems and, more particularly, to systems and methods that utilize welding electrode wire for voltage sensing, substantially as illustrated by and described in connection with at least one of the figures, as set forth more completely in the claims.

### BRIEF DESCRIPTION OF THE DRAWINGS

FIG. 1 is an illustration of an example welding-type system in accordance with aspects of this disclosure.
FIG. 2 is an illustration of an example welding torch wire liner and torch connector.
FIG. 3 is an illustration of an example inlet wire feeder wire guide.
FIG. 4 is an illustration of a view of a front end of an example welding torch.

The figures are not necessarily to scale. Where appropriate, similar or identical reference numbers are used to refer to similar or identical components.

### DETAILED DESCRIPTION

In some welding applications, it is desirable to accurately measure voltages (electric potentials) at one or more points along a welding circuit. In real world applications, the voltage across the welding arc is less than the output voltage of the welding-type power source because voltage drops occur due to impedances of the various conductors of the welding circuit. Accurate voltage measurements are desirable for example, for welding control, prediction, reaction, logging, and verification. In a typical GMAW, metal inert gas welding ("MIG"), or metal active gas ("MAG") application, and/or other voltage-controlled welding-type processes, the voltage drop across the welding arc is an important signal for welding control, prediction, logging, and verification. While a direct measurement of the pure voltage drop across the welding arc (i.e., the voltage between the end of the electrode wire and the workpiece) would generally provide the most accurate measurement of the arc voltage, it is not currently practical to directly measure the pure voltage drop between the end of the wire electrode and the workpiece.

As an alternative to measuring the arc voltage directly, Uecker et al. (U.S. Patent No. 6,066,832) disclosed voltage sense leads use a physical wire with one end electrically connected to the conductor of the torch, for example the power cable. The other end of the voltage sense lead of Uecker et al. is wired back to the welding power source or wire feeder, at which the voltage is measured. The voltage sense leads of Uecker et al. are insulated from the conductor except at the connection point where the sense lead electrically connects to the conductor. As the connection point moves further along the conductor (i.e., closer in the weld circuit to the welding arc), the voltage signal measured is a more accurate representation of the voltage at the end of the wire electrode.

Conventional voltage sense leads electrically connect to components of the torch body. As a result, voltage data measured by conventional voltage sense leads includes not only the voltage drop across the arc, but also voltage drops across several components of the welding torch, including the gooseneck, the retaining head, and other elements and/or electrical interfaces of the torch. Furthermore, physical sensor leads or wires can be damaged when the torch is used (e.g., due to handling and articulation of the torch). A voltage sense lead that does not decay due to physical handling and articulation of the torch is advantageous.

Disclosed example systems measure voltage potential data closer to the pure arc voltage than conventional voltage sense leads, and do not experience reductions in accuracy due to handling and/or articulation of the torch. Disclosed example systems electrically insulate the wire electrode from the torch conductor and the wire feeder frame, and other conductive components of the welding system connected to the welding circuit, except for at the point at which welding-type power is transferred from the conductors to the wire electrode. For example, the electrode wire may be electrically insulated from the frame of the wire feeder (e.g., a chassis or the connector between the power cable and the torch) and from the weld circuit for the length of the electrode that is between the source of the electrode wire (e.g., a wire drum, a wire spool, etc.) and the contact tip at the welding-type torch. As a result, the electrode wire carries the same voltage potential as the contact tip even within the wire feeder. The voltage of the electrode wire is picked up at the wire electrode for measurement, for example, at a location within the wire feeder. As a result, disclosed systems effectively use the wire electrode as a voltage sense lead to obtain a more accurate measurement of arc voltage than conventional techniques.

The terms "welding-type power supply" and "welding-type power source," as used herein, refer to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

The term "welding-type system," as used herein, includes any device capable of supplying power suitable for welding, plasma cutting, induction heating, CAC-A and/or hot wire welding/preheating (including laser welding and laser cladding), including inverters, converters, choppers, resonant power supplies, quasi-resonant power supplies, etc., as well as control circuitry and other ancillary circuitry associated therewith.

The term "welding-type operation," as used herein, includes both actual welds (e.g., resulting in joining, such as welding or brazing) of two or more physical objects, an overlaying, texturing, and/or heat-treating of a physical object, and/or a cut of a physical object) and simulated or virtual welds (e.g., a visualization of a weld without a physical weld occurring).

The term "power" is used throughout this specification for convenience, but also includes related measures such as energy, current, voltage, and enthalpy. For example, controlling "power" may involve controlling voltage, current, energy, and/or enthalpy, and/or controlling based on "power" may involve controlling based on voltage, current, energy, and/or enthalpy. Electric power of the kind measured in watts as the product of voltage and current (e.g., V^{∗}I power) is referred to herein as "wattage."

The terms "control circuit" and "control circuitry," as used herein, may include digital and/or analog circuitry, discrete and/or integrated circuitry, microprocessors, digital signal processors (DSPs), and/or other logic circuitry, and/or associated software, hardware, and/or firmware. Control circuits may include memory and a processor to execute instructions stored in memory. Control circuits or control circuitry may be located on one or more circuit boards, that form part or all of a controller, and are used to control a welding process, a device such as a power source or wire feeder, motion, automation, monitoring, air filtration, displays, and/or any other type of welding-related system.

As utilized herein the terms "circuits" and "circuitry" refer to physical electronic components, any analog and/or digital components, power and/or control elements, such as a microprocessor or digital signal processor (DSP), or the like, including discrete and/or integrated components, or portions and/or combination thereof (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code.

As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

As used, herein, the term "memory" and/or "memory device" means computer hardware or circuitry to store information for use by a processor and/or other digital device. The memory and/or memory device can be any suitable type of computer memory or any other type of electronic storage medium, such as, for example, read-only memory (ROM), random access memory (RAM), cache memory, compact disc read-only memory (CDROM), electro-optical memory, magnetooptical memory, programmable read-only memory (PROM), erasable programmable read-only memory (EPROM), electrically-erasable programmable read-only memory (EEPROM), flash memory, solid state storage, a computer-readable medium, or the like.

As used herein, the terms "torch," "welding torch," or "welding tool" refer to a device configured to be manipulated to perform a welding-related task, and can include a hand-held welding torch, robotic welding torch, gun, or other device used to create the welding arc.

As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations.

Disclosed example welding torches include a contact tip configured to conduct welding-type current to a wire electrode, a conductor configured to transfer welding-type current from a welding-type power source to the contact tip, a connector configured to couple the conductor to a wire feeder to receive the welding-type current, in which the connector includes an inlet configured to receive the wire electrode from a wire feeder, and a wire liner configured to deliver the wire electrode from the wire feeder to the contact tip via the inlet of the connector, in which the wire liner is electrically insulated from the conductor along a length of the wire liner and is electrically insulated from the connector.

In some example welding torches, the wire liner is electrically insulated from the conductor and the connector along a length of the wire liner from the connector to contact tip. In some example welding torches, the wire electrode is configured to be electrically coupled to a first voltage sense lead. In some examples, the first voltage sense lead is connected a voltmeter, the voltmeter configured to measure a voltage between the first voltage sense lead and a second voltage sense lead coupled to a workpiece. In some examples, the first voltage sense lead is coupled to the wire electrode within the wire liner.

Some example welding torches further include a torch body and a retaining head configured to hold the contact tip in place within the torch body, in which the wire liner delivers wire electrode to the retaining head, and in which the wire liner is electrically insulated from the conductor and the connector along a length of the wire liner from the connector to the retaining head. Some example welding torches further include one or more drive rolls configured to pull the wire electrode to the torch, in which the one or more drive rolls are electrically insulated from the contact tip except via the wire electrode.

In some example welding torches, the wire liner includes a conductive inner layer and an insulative outer layer. In some examples, the wire liner includes a mono-coil liner covered by an insulative heatshrink. In some examples, the wire liner includes a plastic tubing.

Disclosed example wire feeders include a frame, a receptacle configured to transfer welding-type current to a welding torch via a torch connector and to position the torch connector to receive a wire electrode, and one or more drive rolls configured to drive the wire electrode to a welding torch, in which the one or more drive rolls being electrically insulated from the frame, and in which the wire electrode is electrically insulated from the frame.

Some example wire feeders include a voltage sensor electrically coupled to the wire electrode. Some example wire feeders include a wire guide configured receive the wire electrode and guide the wire electrode to the one or more drive rolls, in which the wire guide includes a conductive layer configured to guide the wire electrode and an insulative layer configured to electrically insulate the wire electrode and the conductive layer from the frame.

In some example wire feeders, the wire guide includes a mono-coil spring. In some example wire feeders, the voltage sensor is coupled to the mono-coil spring. In some examples, the voltage at the wire electrode corresponds to the voltage between the wire electrode and a workpiece. Some example wire feeders include communication circuitry to transmit the sensed voltage to an external device.

Some example wire feeders include control circuitry configured to control one or more operations of the wire feeder based on the sensed voltage. Some example wire feeders include communication circuitry configured to transmit a power source command to a welding-type power source, in which the power source command is based on the sensed voltage. Some example wire feeders include a voltage sensor coupled to one of the one or more drive rolls and configured to measure a voltage at the wire electrode.

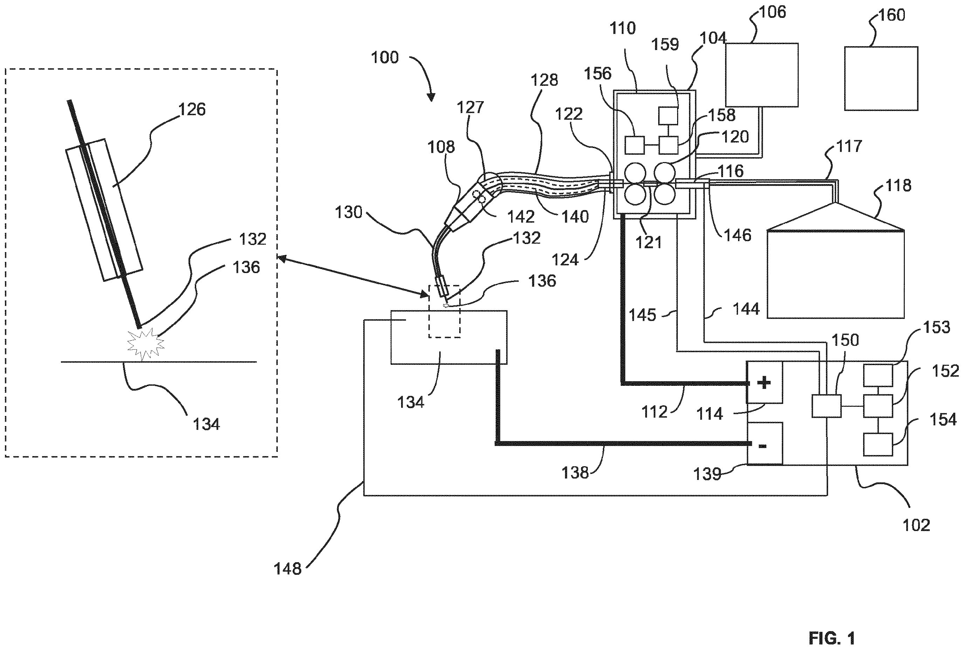

FIG. 1 illustrates an exemplary GMAW system 100 including a welding-type power source 102, a wire feeder 104, a gas cylinder 106, and a torch 108. The welding-type power source 102 includes power conversion circuitry configured to condition input power (e.g., from the AC power grid, an engine/generator set, a combination thereof, or other alternative sources) to welding-type power.

The example wire feeder 104 includes a wire feeder frame 110 that is electrically connected to the welding-type power source 102 via one or more cables 112 which may include power and/or control conductors and/or cables. The cable 112 is connected to an output terminal 114 of the welding-type power source. The wire feeder 104 feeds welding wire electrode 116 from a wire source 118 (e.g., a wire spool, a wire drum, etc.) to the torch 108 via one or more drive rolls 120.

In the example of FIG. 1, the wire electrode 116 is delivered from the wire electrode source 118 to the wire feeder 104 via a conduit 117. While in the illustrated example system 100, the wire electrode source 118 is illustrated as external to the wire feeder 104, in some examples the wire electrode source 118 (e.g., wire spool) is integrated into (e.g., internal to an enclosure of) the wire feeder 104. Further, while the wire feeder 104 is illustrated as external to the welding-type power source 102, in some examples the wire feeder 104 may be integrated into an enclosure of the welding-type power source 102.

During a welding operation, the welding-type power source 102 outputs welding-type current from the terminal 114 to the wire feeder 104 via the cable 112. In other examples, the wire feeder 104 is integrated into the power source 102, in which case the cable 112 may be internal to the power source and/or be connectable to the terminal 114. The example wire feeder 104 of FIG. 1 may include circuitry (e.g., conductors, a contactor, power conversion circuitry, etc.) configured to deliver the welding-type current to the welding torch 108 that is connected to the wire feeder 104.

By way of the wire feeder 104, the welding-type power is electrically connected to a wire feeder receptacle 122 configured to receive a torch connector 124. The torch connector 124 includes a power pin to receive the welding-type current and a wire liner cap to receive the wire electrode 116 and guide the wire electrode 116 into an insulated wire liner. Welding-type current is directed to the receptacle 122 and to the torch connector 124. The torch connector 124 conducts the welding-type current to the torch 108 via a conductor 127 included within a torch cable 128. The conductor 127 may be implemented as multiple individual conductors (e.g., strands, bundles of wire) that, in cooperation, conduct the weld current to the torch 108. The cable 128 also delivers shielding gas and the wire electrode 116 from the wire feeder 104 to the torch 108.

From the conductor 127, the torch 108 conducts the welding-type current to the contact tip 126 (e.g., via one or more conductors and/or components, such as a gooseneck 130, within the torch 108) for delivery to the wire electrode 116. The welding-type current flows from the contact tip 126 to the wire electrode 116 and arcs from the end 132 of the wire electrode 116 to the workpiece 134. During a welding operation, a substantial voltage drop occurs across the arc 136 between the wire electrode end 132 and the workpiece 134. A ground cable 138 connects the workpiece 134 (e.g., via a clamp) to a second power terminal 139 of the welding-type power source 102 to complete the weld circuit between the welding-type power source 102, the wire feeder 104, the torch 108, and the workpiece 134.

As mentioned above, the voltage across the welding arc 136 is a desirable parameter to measure for the purposes of welding control, prediction, reaction, verification, and logging. Due to voltage drops across the conductive elements of the welding circuit, the voltage across the arc 136 is less than the output voltage across the terminals 114 and 139.

In the example system 100, the wire electrode 116 is electrically insulated from the welding-type current except at the contact tip 126 (and/or any other location and/or component within the torch 108 that is of interest for measurement of a voltage potential). The wire electrode 116 is insulated from the conductor 127 of the cable 128 and from the torch body 108 via an insulated wire liner 140 which delivers the wire electrode 116 from the torch connector 124. In some examples, the wire electrode 116 may be in electrical contact with the insulated wire liner 140, while the wire liner 140 is electrically insulated from the conductor 127.

Within the wire feeder 104, the wire electrode 116 is insulated from the wire feeder frame 110 and from any circuitry conducting the welding-type current. For example, the one or more drive rolls 120 are electrically insulated from at least one of the electrode wire 116 or the wire feeder frame 110. For example, the drive rolls 120 may be insulated from the frame 110 such that the one or more drive rolls 120 are electrically isolated from the wire feeder frame 110 when no wire electrode 116 is installed.

In some examples, if the wire feeder 104 includes two sets of drive rolls 120, the wire feeder 104 also includes a middle guide 121 between the two sets of drive rolls 120. The middle guide 121 guides and supports the wire electrode 116 between the sets of drive rolls 120, and insulates the wire electrode 116 from the wire feeder frame 110. The insulated wire liner 140 may include an insulator to electrically insulate the wire electrode 116 from the receptacle 122 and the torch connector 124, and/or the receptacle 122 and the torch connector 124 may include insulation layers to electrically insulate the wire electrode 116 from the welding circuit.

If the torch 108 includes one or more drive rolls 142 to pull wire electrode 116 to the torch (i.e., if the system 100 is a push-pull system) the drive rolls 142 are also insulated from the welding circuit.

In the illustrated example, a voltage sense cable 144 is connected to the wire electrode 116, for example at a wire guide 146. The wire guide 146 receives the wire electrode 116 from the wire source 118 and guides the wire electrode 116 to the one or more drive rolls 120. The example wire guide 146 includes an inner conductive layer to guide the wire electrode 116 and an outer insulative layer to electrically insulate the wire electrode 116 from the wire feeder frame 110. The voltage sense cable 144 may be connected to the conductive layer of the wire guide 146. When the wire electrode 116 is electrically insulated from the welding circuit and, therefore, does not conduct current, the voltage at the wire electrode 116 is equal to the voltage at the contact tip 126 (or the point along the torch 108 at which the wire electrode 116 is electrically contacts the conductors of the welding circuit). Accordingly, in the system 100, sensing the voltage at the wire electrode 116 is equivalent to (e.g., has the same measurement as) sensing the voltage at the contact tip 126 (or the point along the torch 108 at which the wire electrode 116 electrically contacts the conductors of the welding circuit).

In the illustrated example, a second voltage sense cable 148 is connected to the workpiece 134. Although illustrated as cables, the voltage sense cables 144 and 148 may be any conductive paths electrically connected to the wire electrode 116 and the workpiece 134. A voltmeter 150 connected to the first voltage sense cable 144 and the second voltage sense cable 148 can therefore measure the voltage between the wire electrode 116 and the workpiece 134. This voltage between the wire electrode 116 and the workpiece approximates the actual arc 136 voltage. The voltmeter 150 may send a signal representative of this voltage to control circuitry 152 of the welding-type power source 102. The control circuitry 152 may use this voltage data for welding control, prediction, reaction, or verification. For example, the control circuitry 152 may compare the measured voltage between the wire electrode 116 and the workpiece 134 to a command voltage, an expected voltage, and/or a threshold voltage, and command the welding-type power source 102 to change the output power (e.g., voltage and/or current output from the welding-type power source 102 terminals) and/or wire feed speed based on a voltage-controlled control loop or other control scheme. In another example, the control circuitry 152 may compare the wire electrode 116 to workpiece 134 voltage to a voltage range, and determine that there is an error if the wire electrode 116 to workpiece 134 voltage outside of voltage range. The control circuitry 152 may then output a signal to alert an operator or service technician, for example, via a user interface 153 of the welding-type power source 102. Additionally or alternatively, the control circuitry 152 may control the welding-type power source 102 to disable output power.

In some examples, the control circuitry 152 may track the measured voltage between the wire electrode 116 and the workpiece 134 during a welding operation and compare the wire electrode 116 to workpiece 134 voltage to an acceptable range. If the wire electrode 116 to workpiece 134 was outside of the acceptable range during the welding operation, the control circuitry 152 determines that the completed weld is defective and may signal an alert to an operator, for example, via a user interface 153 of the welding-type power source 102.

The control circuitry 152 may also store this voltage data in memory (e.g., memory of the control circuitry 152). In some examples, the voltage sense cables 144 and 148 send voltage sense signals directly to the control circuitry 152, and the control circuitry 152 processes the signals and calculates the voltage between the wire electrode 116 and the workpiece 134.

The welding-type power source 102 may also include communications circuitry 154. The communications circuitry 154 enables the control circuitry 152 to communicate with control circuitry 156 of the wire feeder 104 via communications circuitry 158 of the wire feeder 104. The communications circuitry 154 may also enable the control circuitry 152 to communicate with external computing devices 160 (i.e., smartphones, personal computers, servers, cloud infrastructure, etc.) The communications circuitry 154 and the communications circuitry 158 may communicate via wired (e.g., via an ethernet or serial cable, via signals transposed over the power cable 112, etc.) or wireless connections (e.g., Wi-Fi, Bluetooth, Near-Field Communication, ZigBee, RuBee, or the like). The control circuitry 152 may transmit voltage data sensed by the voltage sense cables 144 and 148 to an external computing device 160 via the communications circuitry 154. The control circuitry 152 may, via the communications circuitry 154, send commands to the wire feeder control circuitry 156 to adjust wire feeder 104 settings (e.g., wire feed speed) based on the voltage signals received from voltage sense cables 144 and 148.

Although illustrated as internal to the welding-type power source 102, the voltmeter 150 may be external to the welding-type power source 102. For example, the voltmeter 150 may be a separate voltmeter, and/or may be integrated into the wire feeder 104.

The voltage data from the voltage sense cables 144 and 148 may also or alternatively be received by control circuitry 156 of the wire feeder 104 or an external computing device 160. For example, the voltage sense cables 144 and 148 may be connected to control circuitry 156 of the wire feeder 104. The control circuitry 156 may determine the voltage between the wire electrode 116 and the workpiece 134 and send commands to the welding-type power source 102 via the communications circuitry 158 based on the determined voltage between the wire electrode 116 and the workpiece 134. For example, the control circuitry 156 may compare the wire electrode 116 to workpiece 134 voltage to an expected or threshold voltage, and send a command via the communications circuitry 158 to the welding-type power source 102 to increase the output power (e.g., decrease one of the voltage or current output from the welding-type power source 102 terminals) if the wire electrode 116 to workpiece 134 voltage is below the threshold. In another example, the control circuitry 156 compares the wire electrode 116 to workpiece 134 voltage to a threshold voltage, and sends a command via the communications circuitry to the welding-type power source 102 to decrease the output power if the wire electrode 116 to workpiece 134 voltage is above the threshold.

In another example, the control circuitry 156 may compare the measured voltage between the wire electrode 116 and the workpiece 134 to a voltage range, and determine that there is an error if the measured voltage is outside of the voltage range. The control circuitry 156 may then send a command via the communications circuitry 158 to the welding-type power source 102 to disable output power. The control circuitry 156 may additionally or alternatively signal an alert to a user, for example via the user interface 159 of the wire feeder 104.

In another example, the voltage sense cables 144 and 148 may be connected to a voltmeter 150, which may be in any location, and the voltmeter may send signals representative of the voltages measured to one or both of control circuitry 152 of the welding-type power source 102 and control circuitry 156 of the wire feeder 104.

Although illustrated as connected to the workpiece 134, the second voltage sense cable 148 may be connected to any point along the welding circuit, for example the feeder frame 110. Accordingly, the voltage between the wire electrode 116 and any point along the welding circuit may be measured. In some examples, the second voltage sense cable 148 is connected to the workpiece 134, and one or more additional voltage sense cables 145 are connected to points along the welding circuit such that additional voltage data may be measured and calculated by the voltmeter 150 and/or control circuitry 152 of the welding-type power source 102 and/or control circuitry 156 of the wire feeder 104.

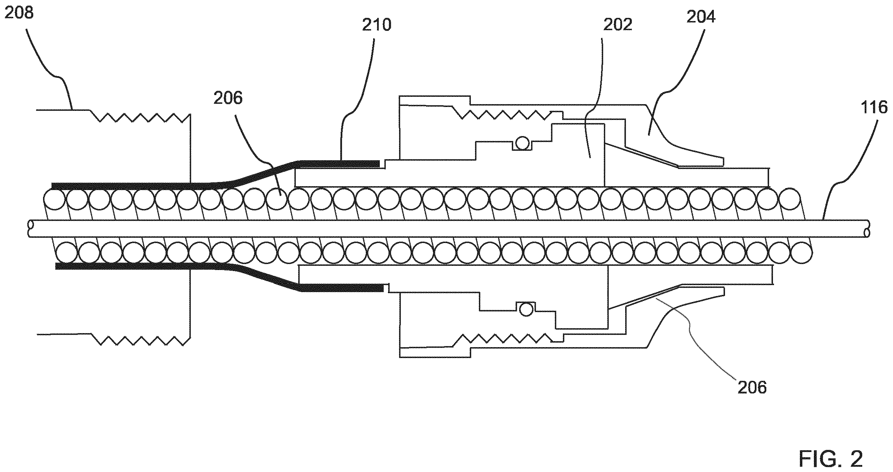

FIG. 2 illustrates a liner adapter 202, a liner cap 204, a monocoil liner 206, and a power pin 208, which may be used in the torch 108 and cable 128 of the system 100 of FIG. 1. The liner adapter 202 may be made of any suitable electrically insulative material, such as a plastic. The monocoil liner 206, as well as the wire electrode 116 inside the monocoil liner 206, is therefore insulated from the power pin 208.

Electrically insulative heat shrink 210 covers the monocoil liner 206 the remaining length of the monocoil liner 206. The monocoil liner 206 (and accordingly the wire electrode 116 within the monocoil liner 206) is therefore insulated from any conductive components of the cable 128 or torch 108 electrically connected to the welding circuit except for at the front end of the torch 108 (e.g., at the contact tip 126 or retaining head of the torch 108).

For non-ferrous wire welding, the monocoil liner 206 may be a plastic tube. In that case, the wire electrode 116 is insulated inside the power pin 208 and the wire liner. If the system includes a torch with a pull motor, (i.e., the torch 108 includes one or more drive rolls 142 to pull wire electrode 116 to the torch), the drive rolls 142 are also insulated from the welding circuit.

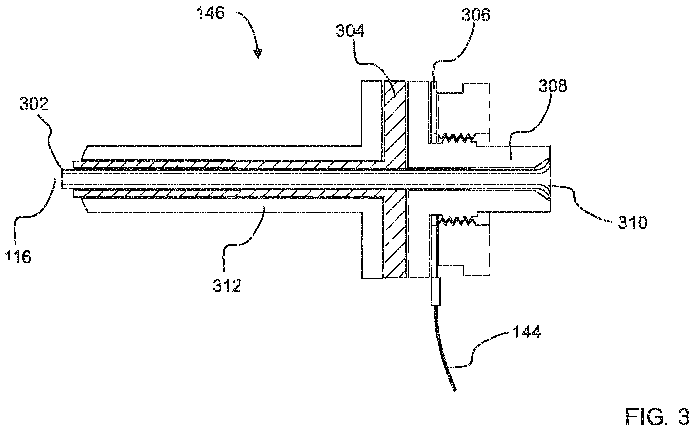

FIG. 3 illustrates an example implementation of the wire guide 146 which insulates the wire electrode 116 from the wire feeder frame 110. The example wire guide 146 is composed of a conductive, wear resistant metal core tube 302 and an insulation layer 304. A voltage sensing cable 144 is electrically connected to the metal core 302 to pick up the voltage signal from the wire electrode 116. As illustrated, the voltage sense cable 144 is indirectly connected to the core tube 302 through a washer 306 and a retaining seat 308. The wire receiving end 310 of the wire guide 146 has a taper for a wire inlet. In some examples, the wire receiving end is alternatively a quick disconnector coupler that couples to a conduit that delivers the wire electrode 116 from the wire electrode source 118 to the wire guide 146. The core tube 302 may have a conductive mono-coil spring within as a jump liner, and the monocoil spring may extend out of the wire receiving end 310.

The core tube 302 may also have other mechanisms to ensure that the core tube 302 is electrically connected to the wire electrode 116 in order to ensure that the voltage sense cable reads the voltage at the wire electrode 116. Such mechanisms may include floating or sliding contact mechanisms. In some examples, the wire guide 146 may include an additional metal tube layer 312 outside of the insulation layer 304 which provides structural support.

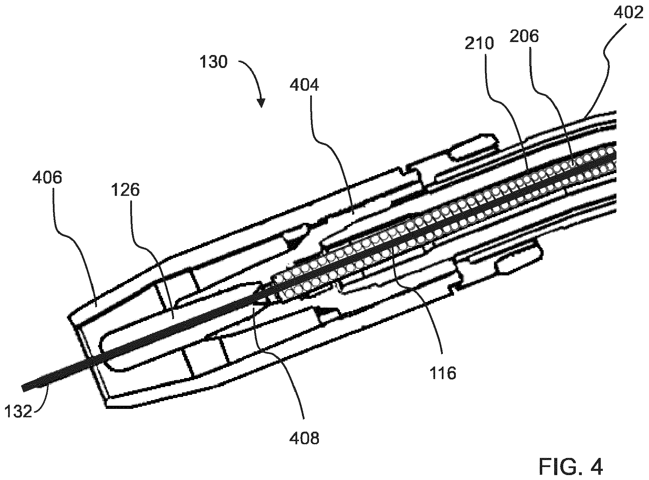

FIG. 4 illustrates an example front end 130 of the welding torch 108, which includes the gooseneck 402, the retaining head 404, the nozzle 406, and the contact tip 126. The wire liner includes a monocoil 206 covered by an insulated heatshrink 210. As illustrated, the insulated wire liner stops inside the retaining head 404 or the contact tip 126. As the wire liner is covered by insulated heatshrink 210, the wire electrode 116 is insulated from the conductors of the torch 108, except the contact tip 126 or the retaining head 404. Therefore, the voltage signal picked up by the voltage sense cable 144 (FIG. 1), will represent the voltage at the contacting point between the wire electrode 116 and the conductors of the torch 108, which as illustrated is the back end 408 of the contact tip 126.

If the heatshrink 210 does not extend as far, and the monocoil 206 contacts the retaining head 404, then the contact point between the wire electrode 116 and the conductors of the torch 108 will be that point on the retaining head 404. In that case, the voltage signal picked up by the voltage sense cable 144 (FIG. 1), will represent the voltage at the point of the retaining head 404 that contacts the monocoil 206. Accordingly, by trimming back the end of the heatshrink 210, it is possible to measure the voltage at any position from the back end 408 of the contact tip 126 to the torch 108 body.

Returning to FIG. 1, the voltage sense cable 144 picks up the voltage of the wire electrode 116, which represents the voltage at the front end 130 of the torch 108. This voltage approximates the voltage at the end 132 of the wire electrode. While the voltage sense cable 144 is illustrated as connected to the wire electrode 116 within the wire guide 146, the voltage sense cable 144 could be electrically connected to the wire electrode 116 at alternative pickup locations. For example, the voltage sense cable could be electrically connected to one or more of the drive rolls 120, an inner conductor of the middle guide 121, the receptacle 122, the monocoil 206 of the wire liner, the wire electrode 116 within the conduit 117, or the wire electrode 116 within the wire electrode source 118.

While examples are disclosed above with reference to GMAW, disclosed examples may be modified to use other wire-fed processes, such as flux-cored arc welding (FCAW).

Certain embodiments are described in the following numbered clauses:
1. A welding torch comprising:
   a contact tip configured to conduct welding-type current to a wire electrode;
   a conductor configured to transfer welding-type current from a welding-type power source to the contact tip;
   a connector configured to couple the conductor to a wire feeder to receive the welding-type current, the connector comprising an inlet configured to receive the wire electrode from a wire feeder; and
   a wire liner configured to deliver the wire electrode from the wire feeder to the contact tip via the inlet of the connector, the wire liner being electrically insulated from the conductor along a length of the wire liner and being electrically insulated from the connector.
2. The welding torch of clause 1 wherein the wire liner is electrically insulated from the conductor and the connector along a length of the wire liner from the connector to contact tip.
3. The welding torch of clause 1, wherein the wire electrode is configured to be electrically coupled to a first voltage sense lead.
4. The welding torch of clause 3, wherein the first voltage sense lead is connected a voltmeter, the voltmeter configured to measure a voltage between the first voltage sense lead and a second voltage sense lead coupled to a workpiece.
5 The welding torch of clause 3, wherein the first voltage sense lead is coupled to the wire electrode within the wire liner.
6. The welding torch of clause 1, comprising:
   a torch body; and
   a retaining head configured to hold the contact tip in place within the torch body, wherein the wire liner delivers wire electrode to the retaining head, and wherein the wire liner is electrically insulated from the conductor and the connector along a length of the wire liner from the connector to the retaining head.
7. The welding torch of clause 1, comprising one or more drive rolls configured to pull the wire electrode to the torch, the one or more drive rolls being electrically insulated from the contact tip except via the wire electrode.
8. The welding torch of clause 1, wherein the wire liner comprises a conductive inner layer and an insulative outer layer.
9. The welding torch of clause 1, wherein the wire liner comprises a mono-coil liner covered by an insulative heatshrink.
10. The welding torch of clause 1, wherein the wire liner comprises a plastic tubing.
11. A wire feeder, comprising:
   a frame;
   a receptacle configured to transfer welding-type current to a welding torch via a torch connector, and to position the torch connector to receive a wire electrode; and
   one or more drive rolls configured to drive the wire electrode to a welding torch, the one or more drive rolls being electrically insulated from the frame; and
   wherein the wire electrode is electrically insulated from the frame.
12. The wire feeder of clause 11, comprising a voltage sensor electrically coupled to the wire electrode.
13. The wire feeder of clause 12, comprising a wire guide configured receive the wire electrode and guide the wire electrode to the one or more drive rolls, the wire guide comprising:
   a conductive layer configured to guide the wire electrode; and
   an insulative layer configured to electrically insulate the wire electrode and the conductive layer from the frame.
14. The wire feeder of clause 13, wherein the wire guide comprises a mono-coil spring.
15. The wire feeder of clause 14, wherein the voltage sensor is coupled to the mono-coil spring.
16. The wire feeder of clause 12, wherein the voltage at the wire electrode corresponds to the voltage between the wire electrode and a workpiece.
17. The wire feeder of clause 12, comprising communication circuitry to transmit the sensed voltage to an external device.
18. The wire feeder of clause 12, comprising control circuitry configured to control one or more operations of the wire feeder based on the sensed voltage.
19. The wire feeder of clause 12, comprising communication circuitry configured to transmit a power source command to a welding-type power source, wherein the power source command is based on the sensed voltage.
20. The wire feeder of clause 11, comprising a voltage sensor coupled to one of the one or more drive rolls and configured to measure a voltage at the wire electrode.

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

## Claims

1. A welding torch comprising:
a contact tip configured to conduct welding-type current to a wire electrode;
a conductor configured to transfer welding-type current from a welding-type power source to the contact tip;
a connector configured to couple the conductor to a wire feeder to receive the welding-type current, the connector comprising an inlet configured to receive the wire electrode from a wire feeder; and
a wire liner configured to deliver the wire electrode from the wire feeder to the contact tip via the inlet of the connector, the wire liner being electrically insulated from the conductor along a length of the wire liner and being electrically insulated from the connector.

2. The welding torch of claim 1 wherein the wire liner is electrically insulated from the conductor and the connector along a length of the wire liner from the connector to contact tip.

3. The welding torch of claim 1, wherein the wire electrode is configured to be electrically coupled to a first voltage sense lead.

4. The welding torch of claim 3, wherein the first voltage sense lead is connected a voltmeter, the voltmeter configured to measure a voltage between the first voltage sense lead and a second voltage sense lead coupled to a workpiece.

5. The welding torch of claim 3, wherein the first voltage sense lead is coupled to the wire electrode within the wire liner.

6. The welding torch of claim 1, comprising:
a torch body; and
a retaining head configured to hold the contact tip in place within the torch body, wherein the wire liner delivers wire electrode to the retaining head, and wherein the wire liner is electrically insulated from the conductor and the connector along a length of the wire liner from the connector to the retaining head.

7. The welding torch of claim 1, comprising one or more drive rolls configured to pull the wire electrode to the torch, the one or more drive rolls being electrically insulated from the contact tip except via the wire electrode.

8. The welding torch of claim 1, wherein the wire liner comprises a conductive inner layer and an insulative outer layer or wherein the wire liner comprises a mono-coil liner covered by an insulative heatshrink or wherein the wire liner comprises a plastic tubing.

9. A wire feeder, comprising:
a frame;
a receptacle configured to transfer welding-type current to a welding torch via a torch connector, and to position the torch connector to receive a wire electrode; and
one or more drive rolls configured to drive the wire electrode to a welding torch, the one or more drive rolls being electrically insulated from the frame; and
wherein the wire electrode is electrically insulated from the frame.

10. The wire feeder of claim 9, comprising a voltage sensor electrically coupled to the wire electrode.

11. The wire feeder of claim 10, comprising a wire guide configured receive the wire electrode and guide the wire electrode to the one or more drive rolls, the wire guide comprising:
a conductive layer configured to guide the wire electrode; and
an insulative layer configured to electrically insulate the wire electrode and the conductive layer from the frame.

12. The wire feeder of claim 11, wherein the wire guide comprises a mono-coil spring, optionally wherein the voltage sensor is coupled to the mono-coil spring.

13. The wire feeder of claim 10, wherein the voltage at the wire electrode corresponds to the voltage between the wire electrode and a workpiece.

14. The wire feeder of claim 10, comprising communication circuitry to transmit the sensed voltage to an external device or comprising control circuitry configured to control one or more operations of the wire feeder based on the sensed voltage, or comprising communication circuitry configured to transmit a power source command to a welding-type power source, wherein the power source command is based on the sensed voltage.

15. The wire feeder of claim 9, comprising a voltage sensor coupled to one of the one or more drive rolls and configured to measure a voltage at the wire electrode.
